# EUROPEAN PATENT APPLICATION

(11) **EP 2 015 193 A2**
(43) Date of publication of application: **14.01.2009**
(21) Application number: 08011434.1
(22) Date of filing: 24.06.2008
(51) Int. Cl.: G06F 13/40

(54) **Computer system with processor expansion device**

(30) Priority: 25.06.2007 TW 96122906
(71) Applicant: ASUSTeK Computer Inc., Peitou, Taipei City (TW)
(72) Inventor: Lin, Chung-Hsien, Taipei City (TW)
(74) Representative: Hager, Thomas Johannes

(57) **Abstract**

In a computer system, a processor expansion device is disposed in an expansion slot conforming to a bus agreement to expand processors. The processor expansion device includes one or more processors and corresponding memories. When the processor expansion device is disposed at the computer system, a BIOS of the computer system ports a bus routing of the processors on the processor expansion device and addresses the memories thereon. Therefore the number of the processors and the memories is expanded when the processor expansion device is disposed at the computer system.

## Description

### BACKGROUND OF THE INVENTION

### Field of the Invention

The invention relates to a computer system and, more particularly, to a computer system with a processor expansion device.

### Description of the Related Art

Besides a computer system with a single processor where the single central processing unit (CPU) executes all the computations, a multi-processor computer system has been developed to satisfy the high processing demand. More than one CPU are provided in the multi-processor computer system for processing a plurality of computations in a time-sharing handling method or in parallel to improve the performance of the computer system.

At present AMD Opteron severs employ the Hyper Transport technology providing a low-latency and high-bandwidth point-to-point transmission architecture for processor-to-processor and processor-to-I/O connections by a parallel or serial bus. On the other hand, for the multi-processor system adopting the Hyper Transport technology, two or four processors are usually provided on a motherboard to optimize the processor performance. Further, in some marketable servers such as IBM System x3755 servers, three processors are provided on the motherboard. This method breaks the common one and is more flexible in the layout of the multi-processor computer system.

A high-bandwidth and low-latency transmission channel can be provided by the Hyper Transport technology between processors, system chips, and peripheral devices in the aforementioned computer system. However, for Hyper Transport extension (HTX) expansion slots compliant with the Hyper Transport, an expandable HTX adaptor card thereof can only expand I/O at most. Even for the aforementioned servers with two to four processors, since the processors are disposed on the motherboard in advance, the processor number is fixed and fails to be expanded dynamically.

Further, in the past, the processor accesses a memory by the north bridge chip in a system chipset. That is, a memory controller is integrally disposed in the north bridge chip. To reduce the load of the north bridge chip, the memory controller is directly disposed in the processor chip in the aforementioned Opteron server further to reduce the signal delay between the processor and the memory. Each processor on the motherboard has an independent memory resource, and it can also share the memory resources of the other processors. For a multi-processor computer system, the processor number is limited by the motherboard areas (the areas for the processors and that for the memory independently controlled by each processor should be provided) thus to fail to be expanded. Therefore it fails to increase the processors of the conventional multi-processor computer system with two to four processors to improve the processing performance of the computer system.

### BRIEF SUMMARY OF THE INVENTION

The invention provides a computer system with a processor expansion device. The computer system includes a motherboard having an expansion slot, a first processor disposed on the motherboard, and a processor expansion device including a second processor. The processor expansion device is detachably electrically connected to the expansion slot. When the processor expansion device is electrically connected to the expansion slot, the first processor is connected to the second processor via a bus interface.

The invention further provides a processor expansion device detachably electrically connected to an expansion slot of a motherboard. The processor expansion device includes a processor and a power module. The power module is used for providing power for the processor. When the processor expansion device is electrically connected to the expansion slot, the processor is connected to a processor on the motherboard via a bus interface.

In a computer system with a uniformed bus agreement according to the invention, a processor expansion device is disposed in an expansion slot conforming to the bus agreement to expand processors in the computer system. The processor expansion device has one or more processors and the corresponding memories thereon. When the processor expansion device is provided at the computer system, the basic input/output system (BIOS) of the computer system ports a bus routing of the processor on the processor expansion device and addresses a memory thereon. Thus the number of the processors and the memories is expanded when the processor expansion device is provided at the computer system.

These and other features, aspects, and advantages of the present invention will become better understood with regard to the following description, appended claims, and accompanying drawings.

### BRIEF DESCRIPTION OF THE SEVERAL VIEWS OF THE DRAWINGS

FIG. 1 is a schematic diagram showing a computer system with a processor expansion device according to the embodiment of the invention;
FIG. 2 is a schematic diagram showing a processor expansion device; and
FIG. 3 is a schematic diagram showing a connection of a plurality of processors in a computer system according to the embodiment of the invention.

### DETAILED DESCRIPTION OF THE EMBODIMENTS

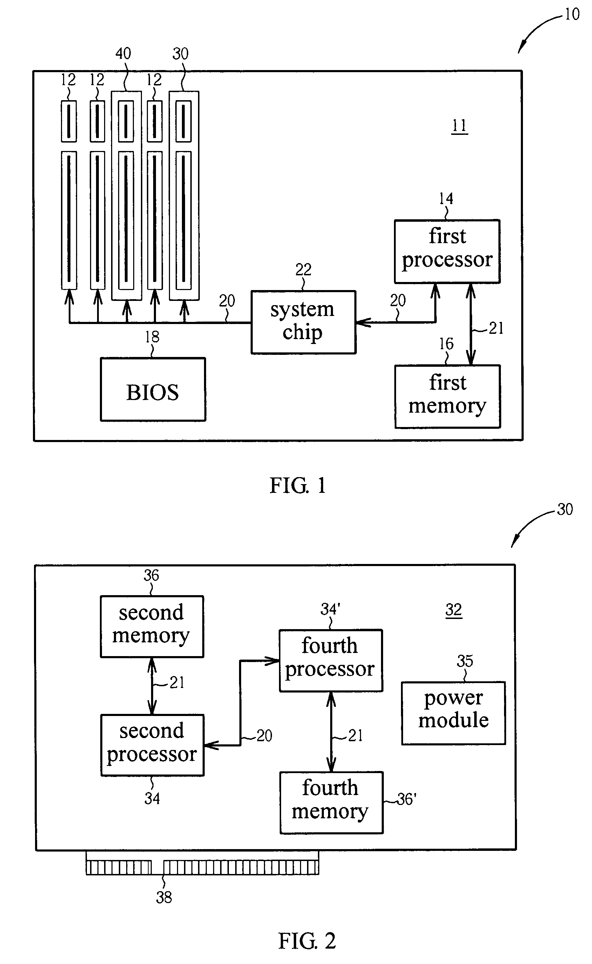

Please refer to FIG. 1 which is a schematic diagram showing a computer system 10 with a processor expansion device according to the embodiment of the invention. The computer system 10 includes a motherboard 11, a first processor 14, and a processor expansion device 30. The motherboard 11 has a plurality of expansion slots 12 which conform to an HTX agreement in the embodiment of the invention. The first processor 14 is disposed on the motherboard 11. The first processor 14 is connected to the plurality of expansion slots 12 and the expansion module disposed in the expansion slots 12 and transmits data therewith by a plurality of buses 20 and a system chip 22 on the motherboard 11. In the embodiment of the invention, the buses 20 conforming to the hyper transport agreement between the system chip 22 and the first processor 14 and that between the expansion slots 12 are transmission channels of high-bandwidth and low-latency.

For the first processor 14 with a memory controller therein, a first memory 16 on the motherboard 11 is directly connected to the first processor 14 by a memory bus 21. Thus the first processor 14 can fast access data in the first memory 16 by the memory bus 21 without the system chip 22. The motherboard 11 further has a BIOS 18 for executing power-on self test (POST) of the computer system 10, initializing the first memory 16, the system chip 22, and the peripheral devices, and providing basic setting parameters of the motherboard 11 and each component connected thereto.

The number of the processors in the computer system 10 can be expanded by disposing the processor expansion devices 30 in the plurality of expansion slots 12 thus to improve the processing performance of the device.

FIG. 2 is a schematic diagram showing the processor expansion device 30. Please refer to FIG. 1 and FIG. 2. In the embodiment of the embodiment of the invention, the processor expansion device 30 is an expansion card conforming to the HTX agreement. It can be connected to the system chip 22 on the motherboard 11 and the other processors to form a multi-processor system by being disposed in the expansion slot 12 conforming to the HTX agreement. The processor expansion device 30 includes a second processor 34 and a fourth processor 34' on a circuit board 32 which are connected with each other by the HT bus 20 conforming to the Hyper Transport agreement. Since the processors 34, 34' can be provided with a memory controller therein, the circuit board 32 of the processor expansion device 30 can be provided with a second memory 36 and a fourth memory 36' which establish channels with the second processor 34 and the fourth processor 34' by the memory buses 21, respectively.

Further, since processors are usually high-power electronic components, a power module 35, which is independent of the motherboard 11 and is electrically connected to the circuit board 32, is provided at the processor expansion device 30 to provide the needed power for the second processor 34 and the fourth processor 34' (the motherboard 11 also has a power module for providing power for each component, which is not shown in the drawings).

The processor expansion device 30 is an HTX expansion card, and therefore it can be electrically connected to any expansion slot 12 conforming to the HTX agreement in the motherboard 11 via a plurality of connecting pins 38 (golden figures). When the processor expansion device 30 is disposed in the expansion slot 12, the second processor 34 (or more than one processor as shown in FIG. 2) on the processor expansion device 30 is connected with the original first processor 14 (or more than one processor) on the motherboard 11 via the HT buses; when the processor expansion device 30 is removed from the expansion slot 12, the processors 34, 34' (and the corresponding memories 36, 36') on the processor expansion device 30 are removed from the computer system 10. To make the processors 34, 34' and the memories 36, 36' work normally with the original system in the motherboard 11 when they are disposed in the expansion slot 12, the BIOS 18 of the computer system 10 should execute the aforementioned setting and testing when the computer system 10 is booted. Further, the BIOS 18 should port the bus routing of the second processor 34 and the fourth processor 34' when the processor expansion device 30 is electrically connected to the expansion slot 12, and therefore the bus routing of the second processor 34 and the fourth processor 34' is integrated with the first processor 14 on the motherboard 11 to allow the multiple processors to cooperatively operate. Further, as the first memory 16 on the motherboard 11 is addressed, the BIOS 18 also addresses the memories 36, 36' thereon (such as reading the SMBus slave address of the DDR memory) when the processor expansion device 30 is electrically connected to the expansion slot 12. Therefore, the memories 36, 36' can be recognized when the system operates and can be also recognized and utilized by the processors (either the processors 34, 34' on the processor expansion device 30 or the first processor 14 on the motherboard 11).

Please refer to FIG. 1. Since the plurality of expansion slots 12 conforming to the HTX agreement are usually provided at the motherboard 11, more than one processor expansion device 30 (respectively including one or more processors and memories) can be plugged into the expansion slots 12 of the computer system 10. Thus the computer system 10 has the ability of expanding the processors without replanning the layout of the motherboard 11, compressing space of the other components on the motherboard 11, or modifying the size of the motherboard 11. For the present computer system conforming to the E-ATX or the SSI housing standard, the size of the motherboard thereof is limited. However, in the embodiments of the invention, even if the computer system 10 conforms to the E-ATX or the SSI housing standard, it can still achieve the function of expanding processors by the processor expansion device 30. To obtain the best method for connecting the multiple processors of the computer system 10 advised by designers, that is, to allow the processors to form a close loop, a sideband connector 40 is electrically connected to the plurality of the expansion slots 12 to produce a sideband signal, and therefore the first processor 14, the second processor 34, and the fourth processor 34' form a close loop in the computer system 10. The sideband connector 40 can be also an adapter plate or a signal cable.

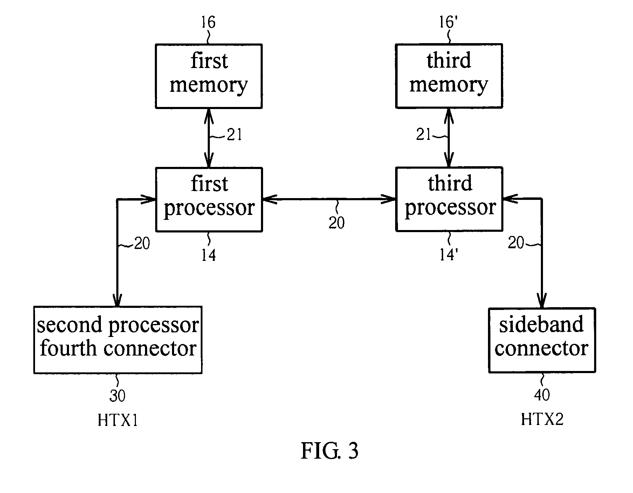

Please refer to FIG. 3 which is a schematic diagram showing a connection of a plurality of processors in a computer system according to the invention. The first processor 14 and a third processor 14' are provided at the motherboard, and they are respectively provided with the first memory 16 and a third memory 16' by the memory buses 21. The processor expansion device 30 and the sideband connector 40 are respectively electrically connected to an expansion slot HTX 1 and an expansion slot HTX 2 of the motherboard. The processor expansion device 30 is provided with the second processor 34 and the fourth processor 34'. In the computer system in FIG. 3, the first processor 14, the second processor 34, the third processor 14', the fourth processor 34', and the sideband connector 40 form a close loop by the HT buses 20.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A computer system with a processor expansion device, **characterized by:**
a motherboard having an expansion slot;
a first processor disposed on the motherboard; and
a processor expansion device comprising a second processor, the processor expansion device detachably electrically connected to the expansion slot;
wherein when the processor expansion device is electrically connected to the expansion slot, the first processor is connected to the second processor via a bus interface.

2. The computer system according to claim 1, **characterized in that** wherein the processor expansion device further comprises a power module for providing power for the second processor.

3. The computer system according to claim 1, **characterized in that** wherein the computer system further comprises a basic input/output system (BIOS) provided at the motherboard, and when the processor expansion device is electrically connected to the expansion slot, the BIOS ports a bus routing of the second processor.

4. The computer system according to claim 3, **characterized in that** wherein the processor expansion device further comprises a memory, and when the processor expansion device is electronically connected to the expansion slot, the BIOS addresses the memory.

5. The computer system according to claim 4, **characterized in that** wherein the processor expansion device further comprises a memory expansion slot, and the memory is detachably electrically connected to the memory expansion slot to be disposed on the processor expansion device.

6. The computer system according to claim 1, **characterized in that** wherein the computer system further comprises a sideband connector, and the sideband connector forms a close loop with the first processor and the second processor when the sideband connector is disposed at the motherboard.

7. The computer system according to claim 1, **characterized in that** wherein the processor expansion device is an expansion card conforming to a hyper transport extension (HTX) agreement.

8. The computer system according to claim 1, **characterized in that** wherein the expansion slot conforms to an HTX agreement.

9. The computer system according to claim 1, **characterized in that** wherein the bus conforms to a hyper transport agreement.

10. A processor expansion device detachably electrically connected to an expansion slot of a motherboard, the processor expansion device **characterized by:**
a circuit board having a connecting pin for being electrically connected with the expansion slot of the motherboard;
a processor electrically connected to the circuit board; and
a power module electrically connected to the circuit board for providing power for the processor,
wherein when the processor expansion device is electrically connected to the expansion slot, the processor is connected to a processor on the motherboard via a bus.

11. The processor expansion device according to claim 10, **characterized in that** wherein the processor expansion device further comprises a memory.

12. The processor expansion device according to claim 11, **characterized in that** wherein the processor expansion device further comprises a memory expansion slot, and the memory is detachably electrically connected to the memory expansion slot to be disposed on the processor expansion device.

13. The processor expansion device according to claim 10, **characterized in that** wherein the processor expansion device is an expansion card conforming to an HTX agreement.
